# EUROPEAN PATENT APPLICATION

(11) **EP 1 519 153 A1**
(43) Date of publication of application: **30.03.2005**
(21) Application number: 04022211.9
(22) Date of filing: 17.09.2004
(51) Int. Cl.: G01C 21/36, G06F 17/30

(54) **Navigation apparatus**

(30) Priority: 29.09.2003 JP 2003337073
(71) Applicant: AISIN AW CO., LTD., Anjo-shi Aichi 444-1192 (JP)
(72) Inventor: Yamada, Kunihiro, Oka-cho Okazaki-shi Aichi 444-8564 (JP); Kano, Toshihiro, Oka-cho Okazaki-shi Aichi 444-8564 (JP); Ogawa, Satoshi, Oka-cho Okazaki-shi Aichi 444-8564 (JP)
(74) Representative: Kramer Barske Schmidtchen

(57) **Abstract**

A navigation apparatus, capable of searching for a destination within an area having an informal name, includes an input unit for inputting an area name and a controller. The controller searches for one or more business places having a name which includes the input area name, generates at least one area-based group of the searched for one or more business places, and displays an area corresponding to one of the at least one area-based groups on a display.

## Description

### INCORPORATION BY REFERENCE

The disclosure of Japanese Patent Application No. 2003-337073 filed on September 29, 2003 including the specification, drawings and abstract are incorporated herein by reference in their entirety.

### BACKGROUND OF THE INVENTION

### 1. Field of Invention

The present invention relates to a navigation apparatus.

### 2. Description of Related Art

In a conventional navigation apparatus for use on a vehicle such as a car, an optimum route from a current position of a vehicle to a specified destination is searched. The optimum route detected in the searching process is displayed on display means thereby presenting information about the optimum route to a user.

The user specifies a destination by inputting a name or an address of the destination via an input unit, such as a remote controller or a touch panel (a specific example of this technique may be found, for example, in Japanese Unexamined Patent Application Publication No. 7-37199). In accordance with the input name or address, the navigation apparatus searches for facilities (such as restaurants, amusement parks, department stores, or the like) or places (such as intersections, public buildings, or the like). The navigation apparatus displays detected facilities or places on the display screen. If a user selects a name of a facility or a place from the detected facilities or places, the selected facility or place is set as a destination. The navigation apparatus includes a database in which coordinate information associated with a large number of facilities and places is described. Thus, when a user selects a name of a facility or a place, a precise position of the selected facility or the place is set as the destination, and a precise route to the destination is displayed on the display means of the navigation apparatus.

### SUMMARY OF THE INVENTION

Although the conventional navigation apparatus is capable of searching for facilities or places in accordance with an input official name of a facility or a place as described above, it is impossible to search for facilities or places, when an unofficial name is input even if the input unofficial name is widely used. For example, an area of Tokyo including areas having official administrative names "1-chome, Daiba, Minato-ku," "2-chome, Daiba, Minato-ku," "1-chome, Omi, Koto-ku," and "Higashi-yashio, Shinagawa-ku" is widely known by an unofficial name "Odaiba." However, in this specific example, the unofficial name "Odaiba" is not included in any of those administrative names of the area. In another example, a particular part of an area with an official administrative name "Yamashita-cho, Naka-ku, Yokohama-shi, Kanagawa-ken" is widely known by an unofficial name "Chuka-gai," which is also not included in the official administrative name. For the above reason, if searching is performed with a conventional navigation apparatus using an unofficial name such as "Odaiba" or "Chuka-gai," no matching places are obtained.

It is possible to add unofficial names to the facility/place name data stored in the storage means so that facilities or places can be searched for also by unofficial names. However, in practice, in order to add such unofficial names, the storage means has to have a very large storage capacity, and widely used storage media such as CD-ROM or DVD-ROM do not have a storage capacity large enough to additionally store unofficial names.

Furthermore, in the conventional navigation apparatus described above, an area cannot be set as a destination when the area is large even if the official name of the area is used. For example, assume a user wants to drive to an area in which there are a large number of commercial establishments, amusement facilities, restaurants, and/or the like, park his/her car at a parking lot in the area, and walk around the area. If searching is performed using the name of that large area, the area itself is not displayed as a search result on the display screen. Instead, the conventional navigation apparatus will only display the individual facilities or places having a name that is a part of which is the same as the large input area name.

Therefore, various exemplary embodiments of this invention provide a navigation apparatus capable of searching for an area based on an input area name even when the input area name is not official, and is capable of setting a destination corresponding to the input area name, without increasing the storage capacity of a storage means to specifically include data relating to an unofficial area name.

Various exemplary embodiments of the invention provide a navigation apparatus including an input unit for inputting an area name and a controller. The controller searches for one or more business places having a name which includes the input area name; generates at least one area-based group of the searched for one or more business places; and displays an area corresponding to one of the at least one area-based groups on a display.

Various exemplary embodiments of the invention provide a method for searching for a location, including inputting an area name; searching for one or more business places having a name which includes the input area name; generating at least one area-based group of the searched for one or more business places; and displaying an area corresponding to one of the at least one area-based groups.

### BRIEF DESCRIPTION OF THE DRAWINGS

Exemplary embodiments of the invention will now be described with reference to the accompanying drawings, wherein:

Fig. 1 is a diagram showing an area map displayed on a screen in accordance with a result of an area name search process performed by a vehicle navigation apparatus according to a first exemplary embodiment of the invention;

Fig. 2 is a diagram showing a structure of the vehicle navigation apparatus according to the first exemplary embodiment of the invention;

Fig. 3 is a diagram showing a functional structure of the vehicle navigation apparatus according to the first exemplary embodiment of the invention;

Fig. 4 is a diagram showing a search result displayed on a screen wherein the search result is obtained in an area name search process performed by a vehicle navigation apparatus according to the first exemplary embodiment of the invention;

Fig. 5 is a flow chart showing a process performed by a vehicle navigation apparatus to search for facility names according to the first exemplary embodiment of the invention;

Fig. 6 is a diagram showing an area map displayed on a screen in accordance with a result of an area name search process performed by a vehicle navigation apparatus according to a second exemplary embodiment of the invention; and

Fig. 7 is a flow chart showing a process performed by a vehicle navigation apparatus to search for facility names according to the second exemplary embodiment of the invention.

### DETAILED DESCRIPTION OF PREFERRED EMBODIMENTS

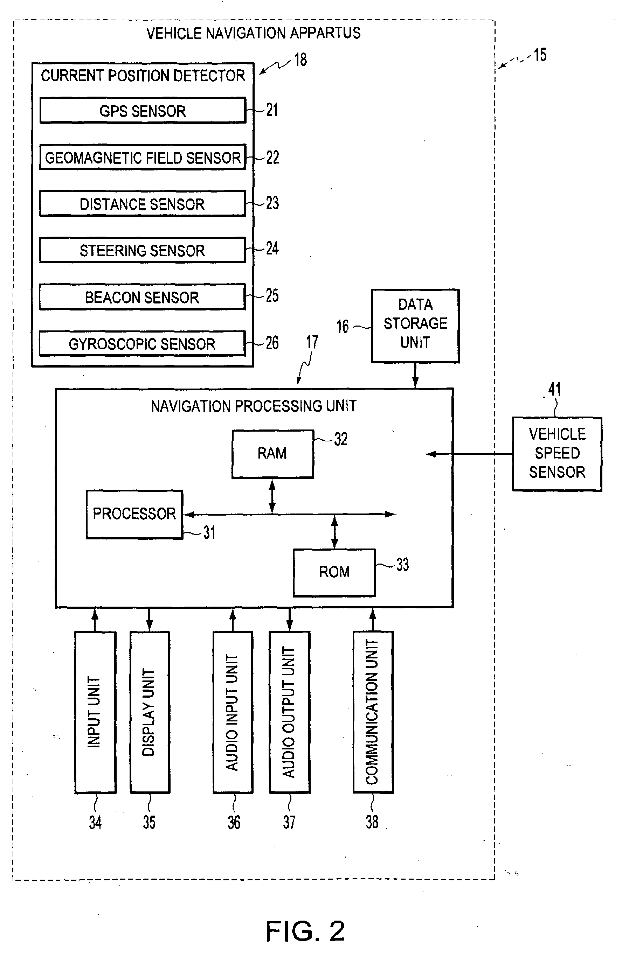

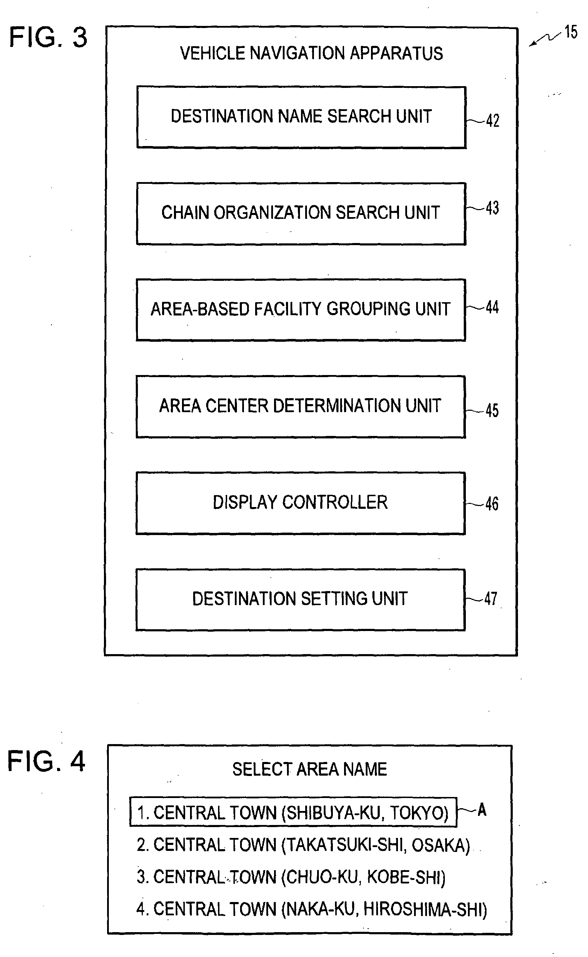

Fig. 2 is a diagram showing a structure of a vehicle navigation apparatus according to a first exemplary embodiment of the invention. Fig. 3 is a diagram showing a functional structure of a vehicle navigation apparatus according to the first exemplary embodiment of the invention.

Fig. 2 shows a vehicle navigation apparatus 15 for use on a vehicle such as, for example, a passenger car, a truck, a bus, or a motorcycle. The vehicle navigation apparatus 15 can be a type of computer and may include a current position detector 18 for detecting a current position and a data storage medium used as a data storage unit 16 for storing road data, search data, etc. The navigation apparatus 15 may also include a navigation processing unit 17 as a type of controller, for performing various kinds of processes such as, for example, navigation processing based on input information, an input unit 34, a display unit 35, an audio input unit 36, an audio output unit 37, and a communication unit 38. A vehicle speed sensor 41 may be connected with the navigation processing unit 17.

The current position detector 18 may include a GPS (Global Positioning System) sensor 21, a geomagnetic field sensor 22, a distance sensor 23, a steering sensor 24, a beacon sensor 25, a gyroscopic sensor 26, and an altimeter (not shown). All of the GPS sensor 21, the geomagnetic field sensor 22, the distance sensor 23, the steering sensor 24, the beacon sensor 25, the gyroscopic sensor 26, and the altimeter are not necessarily needed, and one or more of them may be combined, divided, or removed depending on, for example, cost and/or production resources.

The GPS sensor 21 can detect a global current position by receiving radio waves transmitted from artificial satellites (GPS satellites). The geomagnetic field sensor 22 can detect the direction of a vehicle by measuring geomagnetism. The distance sensor 23 can detect the distance between particular positions on a road on the basis of the rotation speed of wheels (not shown) or on the basis of the value obtained by integrating the acceleration twice.

The steering sensor 24 can detect a steering angle. As for the steering sensor 24, for example, an optical rotation sensor attached to a rotating part of a steering wheel (not shown), an angle sensor disposed on a wheel, or a similar sensor may be used.

The beacon sensor 25 can detect the current position by receiving position information from beacons disposed along roads. The gyroscopic sensor 26 detects the angular rotation speed, i.e., a turning angle, of the vehicle. As for the gyroscopic sensor 26, for example, a gas-rate gyroscope and/or a vibrating gyroscope can be used. The direction of the vehicle can be detected by integrating the turning angle detected by the gyroscopic sensor 26.

Note that each of the GPS sensor 21 and the beacon sensor 25 can independently detect the current position. The current position can also be determined based on a combination of the distance detected by the distance sensor 23 and the direction detected by the geomagnetic field sensor 22 and the gyroscopic sensor 26. Alternatively, the current position can also be detected based on a combination of the distance detected by the distance sensor 23 and the steering angle detected by the steering sensor 24.

In the data storage unit 16, various kinds of data may be stored in, for example, the form of a database containing data files. Such data may include, search data used in searching for a route, map data and facility data. According to the data, various kinds of information may be displayed on a screen of the display unit 35. For example, a navigation map along a route detected via searching, a photograph or a simplified diagram indicating a feature of an intersection or a route, the distance to a next intersection, the traffic structure of the next intersection, and/or other kinds of information may be displayed. Various kinds of data used by the audio output unit 37 to output audio information may also be stored in the data storage unit 16.

The search data can include, for example, intersection data, road data, traffic restriction data, and/or route display data. The intersection data can include, for example, data indicating the number of intersections described in the intersection data, data associated with respective intersection, and/or identification numbers assigned to the respective intersections. The intersection data my also include data indicating the number of roads joining the intersection and identification numbers identifying respective roads. The intersection data may further include data indicating the type of each intersection, e.g., data indicating whether traffic lights are installed or no traffic lights are installed.

The road data can include, for example, data indicating the number of roads described in the road data, data associated with respective roads, and/or identification numbers assigned to the respective roads. The data associated with each road can indicate the road type, the length of the road, and/or the travel time indicating the time needed to travel the road. As used herein, "road type" refers to a road attribute, for example, indicating an administration-classified road type such as a national road, a prefectural road, a main local road, a general road, and an expressway.

The road data can include, for example, data indicating properties of the road itself such as, for example, a road width, a slope, a cant, an altitude, a bank, a road surface state, presence/absence of center divider, the number of lanes, a point at which the number of lanes decreases, and/or a point at which the width decreases. In the case of an expressway or a main multi-lane road, a set of lanes in one direction may be stored as road data representing a road and the other set of lanes of the same road in the opposite direction may separately stored as road data representing a separate road, i.e., each expressway or main multi-lane road may treated as a double road wherein a set of inbound lanes and a set of outbound lanes are each stored as separate road data. The road data may also include, for example, comer data indicating the curvature radius, an intersection, a T junction, and/or a comer entrance. The road data may further include, for example, road attributes such as, for example, a railroad crossing, an expressway entrance/exit ramp, a tollgate of an expressway, a downhill road, and/or an uphill road.

The navigation processing unit 17 can be a CPU (controller) responsible for control over the whole vehicle navigation apparatus 15, and can include, for example, a processor 31 such as an MPU serving as operation means, a RAM (Random Access Memory) 32 used, for example, as a working memory by the processor 31 in various kinds of operation processing, and a ROM (Read Only Memory) 33 used as a storage medium for storing various kinds of programs. The various programs may include, for example, a control program, a route search program for searching for a route to a destination, a navigation program for providing navigation/guidance along a route, a program for determining a particular section, and/or a program for searching for a point or a facility. The navigation processing unit 17 can be connected with the input unit 34, the display unit 35, the audio input unit 36, the audio output unit 37, and the communication unit 38. The navigation processing unit 17 can perform various processes such as, for example, searching for a route, providing navigation/guidance along a route, determining of a specific section, or searching for a point or a facility. The audio input unit 36 and the audio output unit 37 are not necessarily needed, and one or more of them may be combined, divided, or removed depending on, for example, cost and/or production resources.

The data storage unit 16 and the ROM 33 may each be formed of, for example, one or more of a magnetic core or a semiconductor memory, a magnetic tape, a magnetic disk, a magnetic drum, a CD-R/W, an MD, a DVD-RAM, a DVD-R/W, an optical disc, an MO, an IC card, an optical card, and/or a memory card. These storage mediums may be installed in the vehicle navigation apparatus 15 in a fixed fashion or a user-removable fashion.

Although in the exemplary embodiment described above, programs are stored in the ROM 33, and data is stored in the data storage unit 16, one or more of the programs and data may be stored on an external storage medium. In this case, for example, a storage medium such as a flash memory (not shown) may be disposed in the navigation processing unit 17, and a program and/or data may be loaded into this storage medium from the external storage medium. This makes it possible to update the one or more programs and/or data by exchanging the external storage medium. Thus, various kinds of processes can be performed in accordance with programs and data stored on the storage medium. As the external storage medium, any type of storage medium such as a magnetic tape, a magnetic disk, a magnetic drum, a CD-R/W, an MD, a DVD-RAM, a DVD-R/W, an optical disc, an MO, an IC card, an optical card, and/or a memory card can be used.

The communication unit 38 serves to communicate with, for example, an FM transmitter, a telephone network, the Internet, a portable telephone network, and/or wireless LAN (Local Area Network), to receive various kinds of information. Such information may include, for example, traffic information such as traffic congestion information via an information sensor (not shown), traffic accident information, and/or D-GPS information indicating the detection error of the GPS sensor 21. A program or programs for realizing the functions of the vehicle navigation apparatus 15 and/or other programs and data needed to operate the vehicle navigation apparatus 15 may be downloaded from an information center (such as an Internet server or a navigation server) via one or more base stations (such as a provider terminal of the Internet or a communication station connected to the communication unit 38 via a telephone network or other communication networks) via the communication unit 38. In this case, if at least a part of the program(s) and/or data are received via the base stations, the processor 31 can store the downloaded program(s) or data into a read/write memory such as, for example, the RAM 32, a flash memory, or a hard disk. Thus, the processor 31 may perform various kinds of processes in accordance with the downloaded program(s) and/or data.

In this case, the program and the data may be stored separately on different storage media or may be stored on the same storage medium.

A program and/or data may also be downloaded from an information center into a storage medium such as, for example, a memory card or CD-R that can be removably mounted on a personal computer installed in a home. Thus, various kinds of processes may be performed in accordance with the program and/or data stored in the storage medium.

The input unit 34 may be used, for example, to input a destination point or correct a starting point. The input unit 34 can include, for example, operation keys, push buttons, a jog dial, and/or arrow keys disposed on the main part of the vehicle navigation apparatus 15. Alternatively, a remote controller may be used as the input unit 34. Furthermore, in the case in which the display unit 35 includes a screen with a touch panel, the input unit 34 can be realized using operation switches and/or operation menu keys displayed on the screen of the display 35. In this case, commands and/or data can be input by pressing or touching an operation switch, as with a usual touch panel.

Guide information on operations, operation menus, and operation keys; a route from the current position to the destination; guide information along the route; and/or other information may be displayed on a screen of the display unit 35. As for the screen of the display unit 35, a CRT, a liquid crystal display, an LED (Light Emitting Diode) display, a plasma display, and/or a hologram device that projects a hologram on glass may be used.

The audio input unit 36 can include a microphone (not shown) for inputting a voice to be recognized and a voice recognition unit (not shown). Using the audio input unit 36, it is possible to input a voice indicating necessary information. More specifically, the audio input unit 36 allows a user to input a destination or a root search command by voice without having to operate the input unit 34. The audio output unit 37 may include a voice synthesizer and a loudspeaker (not shown). A voice indicating, for example, guide information or speed change information is synthesized by the voice synthesizer and output from the loudspeaker to provide the information to a user. Not only voices synthesized by the voice synthesizer, but also various kinds of sounds and various kinds of guide information recorded in advance on a tape or a memory can also be output from the loudspeaker.

According to the present exemplary embodiment, and for ease of explanation, the vehicle navigation apparatus 15 may also be described in terms of functional blocks, as shown in Fig. 3. The functional blocks may include, for example, a destination name search unit 42 for searching for a name of a facility or place specified as a destination and a chain organization search unit 43 for searching for business places of chain organizations having a name, a part of which is equal to the name of the area specified as the destination. The functional blocks may also include an area-based group generation unit 44 for grouping, by area, the chain organization business places extracted as a result of searching performed by the chain organization search unit 43 and an area center determination unit 45 for determining the center of an area corresponding to an area-based group in accordance with the centroid of the area-based group. The functional blocks may include a display controller 46 for displaying an area corresponding to the area-based group on the display unit 35 and a destination setting unit 47 for setting a place specified by a user as a destination. It should be appreciated that the above-described functional blocks, in whole or in part, may be embodied in one or more controller (e.g. navigation processing unit 17) within the vehicle navigation apparatus 15. Furthermore, each of the input unit 34 and the audio input unit 36 can function as an input unit for inputting a name of an area. The area name may be an official name or an unofficial name such as a very popular nickname.

If a user inputs a name of a facility or a place to specify a destination by operating the input unit 34 or the like, the destination name search unit 42 accesses, for example, a database including various kinds of data files stored in the data storage unit 16 and searches for matching facilities or places having a name exactly the same as the input name. If one or more matching facilities or places are found, the matching facilities or places are extracted and the display controller 46 displays the extracted facilities or places as candidates for the destination on the display unit 35. On the other hand, if no matching facilities or places are found, the chain organization search unit 43 determines that the input name is an area name, and the chain organization search unit 43 searches for a business place of a chain organization having a name, a part of which is the same as the input area name.

As used herein, "chain organization" refers to an organization having a plurality of branches (or branch offices) such as stores, sales offices, stops, or stations. Specific examples are a convenience store chain, a supermarket chain, a department store chain, a restaurant chain, a bar chain, a karaoke chain, a game arcade chain, a home delivery service chain, a gas station chain, a bus route, a railroad route, a bank, and/or a credit association. Further, as used herein, the term "business place" generically describes business places and facilities such as a branch, a branch office, a sales office, a stop, a station, etc. The chain organization may be of any type and may be operated or managed by any individual or institution such as a company, a government organization, a local government or the like. There is no particular restriction on the size of chain organizations. For example, each chain organization may have only one business place or a large number of business places located over a large area such as, for example, a country or in a small area such as a city.

In many cases, a location of a business place of a particular chain organization is included as part of the name of the business place. In most cases, a widely used area name is employed as a part of a name of a business place regardless of whether the widely used area name is the official area name. For example, in the case of convenience stores located in the area called "Odaiba" (described above), branches of x-brand convenience stores may have a name "x-brand Odaiba Store." In the case of branches of y-brand banks located in the area called "Chuka-gai," branches may have a name "y-brand Bank Chuka-gai Branch."

Thus, if an area name to search for is input, the chain organization search unit 43 can generate search terms by combining respective words indicating business places such as, for example, store, branch, branch office, sales office, office, stop, and/or station at the end of the input area name. Note that each search term may be generated by adding one of the words indicating business places at the end of the input area name. For example, if "Odaiba" is input as an area name, then Odaiba Store," "Odaiba Branch," "Odaiba Sales Office," "Odaiba Branch Office," "Odaiba Office," "Odaiba Stop," and "Odaiba Station" are all set as search terms.

The words indicating business places used in setting search terms may be properly determined in advance. There is no particular restriction on the number of words indicating business places. For example, only "store" and "branch office" may be employed. Alternatively, only "store," "branch," "branch office," "sales office," "office," "stop," and "station" may be employed. If necessary, a greater number of words indicating business places than the above-described examples may also be employed.

The chain organization search unit 43 accesses the facility database stored in the data storage unit 16 and searches for facility names ending with any one of the search terms. As a result, all facilities having a name ending with any one of the search terms are extracted. For example, when "Odaiba Store" is used as a search term, all facilities having a name " " Odaiba Store" (" " denotes an arbitrary word or words) are extracted as a result of searching. Similarly, when "Odaiba Office" is used a search term, all facilities having a name " Odaiba Office" are extracted. Note that the search result is substantially accurate and does not include results that do not include the term "Odaiba."

Depending on the database used, names of facilities or places may be described in an order opposite to that in which names are expressed in a natural language. For example, when a facility name is " Odaiba Store", the facility name is described as "Store, Odaiba, " in the database. In this case, the chain organization search unit 43 can set "Store Odaiba" as a search term and searches for facility names ending with the search term. In the following description of the present exemplary embodiment, for ease of explanation, it is assumed that facility/place names expressed in the same order as in the natural language are stored in the database. In practice, the order may be properly adjusted to accommodate any database organization.

In the facility data searching process performed by the chain organization search unit 43, searching may be limited to facilities having a landmark. Facilities having a landmark refer to those facilities that are displayed with a landmark on a map on a display of the display unit 35 of the vehicle navigation apparatus 15. For example, when convenience stores are selected as landmarked facilities, the chain organization search unit 43 can extract a database in which convenient store chains corresponding to landmarks displayed on the screen of the display 35 are described, and the chain organization search unit 43 searches the database for facility names ending with a search term generated as described above (by adding a word indicating a business place at the end of an input area name). This makes it possible to narrow the facility data to search. Thus, an amount of processing needed in the searching process is reduced.

The area-based group generation unit 44 then classifies the facilities (e.g., business places of the chain organization extracted via the searching process performed by the chain organization search unit 43) into groups in accordance with areas. Specfically, the area-based group generation unit 44 generates area-based groups of business places. The facilities are grouped by areas corresponding to local government areas such as, for example, cities, towns, villages, and/or special wards. To group the facilities into such groups, retrieved facilities are filtered in accordance with, for example, address information associated with the retrieved facilities. If there are groups corresponding to adjacent local government areas, the area-based group generation unit 44 may combine those groups into a single area-based group. If there are a plurality of area-based groups generated in the above-described manner by the area-based group generation unit 44, the display controller 46 displays the plurality of area-based groups on a screen of the display unit 35 so that a user can select a desired area-based group.

The area center determination unit 45 calculates the centroid of the area-based group generated by the area-based group generation unit 44 (when there is only one area-based groups generated by the area-based group generation unit 44) or the area-based group selected by the user (when there are two or more area-based groups generated by the area-based group generation unit 44) and the area center determination unit 45 sets the calculated centroid as the center of the area. Note that, as used herein, the term "centroid" refers to the geometric center of the total of facilities, stores, or the like of the chain organization in the area-based group on the map. The centroid is determined, for example, such that the mean values of coordinates in latitude and longitude indicated by position information associated with respective facilities are calculated, and a point having the resultant mean coordinates is employed as the centroid.

In the calculation of the centroid, weighting may be performed for each facility, depending on an attribute of the facility or the type of each facility. For example, facilities having central functions in an area or facilities attracting a large number of customers may be weighted by large factors. Facilities having no central functions in an area may be weighted by small factors. For example, railroad stations can be regarded as facilities having central functions in areas, and thus a larger weighting factor may be assigned to them than to other facilities. The weighting of facilities allows the centroid to be set not at the geometric center of an area but at a substantially more social, economical, or cultural center of the area. That is, it becomes possible to determine the center of an area in a more proper manner.

The display controller 46 displays an area including all facilities in the area-based group as an area corresponding to the input name on the screen of the display unit 35 as an area in which further searching is to be performed. The location of the centroid determined by the area center determination unit 45 is also displayed on the screen of the display unit 35. Thus, a user can easily select a desired point in the area as a destination.

If the user selects, as a destination, one of facilities or places extracted by the destination name search unit 42 and displayed as a candidate for the destination on the screen of the display unit 35, the destination setting unit 47 sets the selected facility or place as the destination. If a particular point in the area displayed on the screen of the display unit 35 is selected by the user, that selected point is set as the destination, and the vehicle navigation apparatus 15 searches for a route from the current position of the vehicle to the specified destination.

It should be appreciated that the controller (e.g. navigation processing unit 17) of the vehicle navigation apparatus 15 may also include a search unit for searching for a facility or a place name, a route search unit for searching for a route to a destination, and other units. Because these units are common in conventional navigation apparatus, details of those units are not described herein.

Now, the operation of the vehicle navigation apparatus 15 constructed in the above-described manner is described below. The following description is focused on a process of searching for an area name while setting a destination.

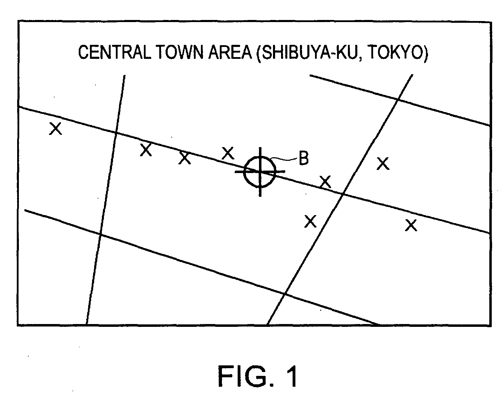

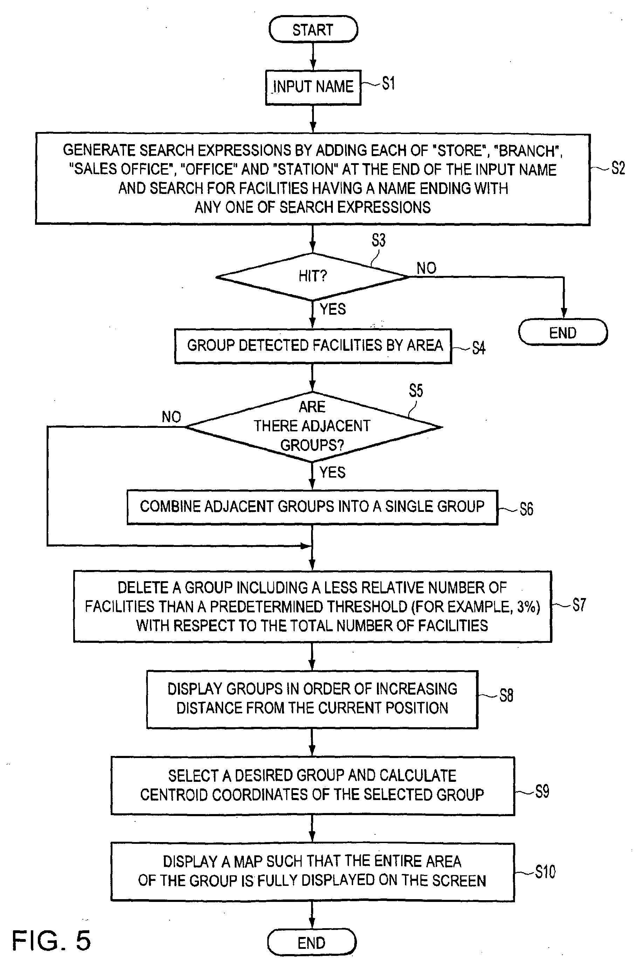

Fig. 1 is a diagram showing an example of an area map displayed on a screen in accordance with a result of an area name search process performed by a vehicle navigation apparatus according to a first exemplary embodiment of the invention. Fig. 4 is a diagram showing an example in which a search result obtained in an area name search process performed by a vehicle navigation apparatus is displayed on a screen according to the first exemplary embodiment of the invention. Fig. 5 is a flow chart showing a process performed by a vehicle navigation apparatus to search for facility names according to the first exemplary embodiment of the invention.

The operation of the vehicle navigation apparatus 15 is described below with reference to a specific example in which an area widely known as "Central Town" in Shibuya-ku in Tokyo is set as a destination. First, a user inputs a destination by operating operation keys on the input unit 34 (step S1). More specifically, for example, an area name "Central Town" indicating the destination is input. If the area name is input in hiragana of Japanese, the expression in hiragana may be converted into an expression in kanji.

The destination name search unit 42 accesses, for example, the database stored in the data storage unit 16 and searches for facilities or places having a name exactly the same as "Central Town." If no facility or place having a name exactly the same as "Central Town" is found, an area name search process is started. In this case, the chain organization search unit 43 determines that the input term "Central Town" is a name of an area, and the chain organization search unit 43 searches for business places having a name including "Central Town."

In this search process, the chain organization search unit 43 first generates search terms by combining each of predetermined words indicating business places at the end of "Central Town" (step S2). Herein, it is assumed that the predetermined words indicating business places are "store," "branch," "sales office," "office," and "station." Thus, in this specific case, "Central Town store," "Central Town branch," "Central Town sales office," "Central Town office," and "Central Town station" are set as search terms. The chain organization search unit 43 accesses the facility database stored in the data storage unit 16 and performs backward-match searching using the search terms to extract facilities having a name ending with any one of the search terms (step S3). Specifically, facilities having any one of the following names are extracted: " Central Town store," " Central Town branch," " Central Town sales office," " Central Town office," and " Central Town station." Note that the search result is substantially accurate and only includes results with the search term Central Town.

If no facility having a name ending with one of the search terms is found (step S3 = NO), the area name search process is ended. Thus, the display controller 46 displays a message on the screen of the display unit 35 to inform a user that no place corresponding to the input name is found. For example, a message "No place corresponding to the input name is found" is displayed on the screen of the display unit 35. In this case, further searching may be performed to extract facilities having a name including "Central Town" at any position of the name. In this case, facilities or places having a name in which "Central Town" is included at any position are extracted.

If facilities having a name ending with one of the search terms described above are extracted (step S3 = YES), the area-based group generation unit 44 generates area-based groups by grouping the business places of the chain organization extracted in the searching process performed by the chain organization search unit 43 into groups by areas (step S4). Specifically, facilities such as " Central Town store," " Central Town branch," " Central Town sales office," " Central Town office," and " Central Town station" are grouped by areas corresponding to cities, towns, villages, or special wards. The generation of the area-based groups may be performed by filtering the facilities extracted in the searching process in accordance with address information associated with the facilities. As a result, area-based groups of "Central Town" are obtained.

Because the grouping of facilities may be performed by filtering the facilities in accordance with the address information, each area-based group can include facilities of two or more different chain organizations, if there are such facilities. For example, an area-based group of "Central Town" can include a Central Town store of convenience store A, a Central Town store of convenience store B, and a Central Town store of convenience store C. Furthermore, the area-based group of "Central Town" can also include a Central Town branch of bank D and a Central Town sales office of travel agency E.

The area-based group generation unit 44 then determines whether there are area-based groups corresponding to adjacent areas such as cities, towns, villages, or special wards (step S5). If there are area-based groups corresponding to adjacent areas such as cities, towns, villages, or special wards (step S5 = YES), the area-based group generation unit 44 combines such area-based groups into a single area-based group (step S6). For example, as described above, an area of Tokyo including areas having official administrative names "1-chome, Daiba, Minato-ku," "2-chome, Daiba, Minato-ku," "1-chome, Omi, Koto-ku," and "Higashi-yashio, Shinagawa-ku" is widely known by an unofficial name "Odaiba." Therefore, facilities having a name such as " Odaiba Store" located in the area widely called "Odaiba" are grouped into three area-based groups corresponding to three special wards Minato-ku, Koto-ku, and Shinagawa-ku. Those three area-based groups are combined into a single area-based group when area-based groups corresponding to adjacent special wards are combined together, and the resultant area-based group is dealt with as a single area-based group corresponding to the area called "Odaiba." For the above-described purpose, the area-based group generation unit 44 combines area-based groups corresponding to adjacent cities, towns, villages, or special wards into a single area-based group.

The display controller 46 displays, on the screen of the display unit 35, a list of area-based groups generated by the area-based group generation unit 44, for example, as shown in Fig. 4 so that a user can select a desired area-based group. When there are a plurality of area-based groups, the display controller 46 may display the list of the area-based groups in accordance with a predetermined priority such that a group with higher priority is displayed at an upper location in the list. The priority may be determined, for example, such that a group located closer to the current position of the vehicle detected by the current position detector 18 has higher priority (see, e.g., step S8), or such that a group located closer to a place registered as the position of a user's home has higher priority. The priority may also be determined such that an area-based group including a greater number of facilities of chain organizations has higher priority. In a case in which there are a greater number of area-based groups than can be displayed at a time on the same screen, the area-based groups may be displayed in a scrollable fashion.

In order to display area-based groups that satisfy a predetermined criterion, the display controller 46 may discard such area-based groups that do not meet the predetermined criterion. For example, area-based groups corresponding to locations that are not regarded as areas may be removed from candidates for areas. Alternatively, for example, area-based groups including a less relative number of facilities or business places of chain organizations than a predetermined threshold (for example, 3%) with respect to the total number of facilities or business places included in the generated area-based groups may be removed (step S7).

In the example shown in Fig. 4, area-based groups surviving after the discarding process are displayed. Accordingly, in the example shown in Fig. 4, an area-based group of "Central Town" in Nara-ken has been discarded from a plurality of area-based groups of "Central Town" generated by the area-based group generation unit 44, and the remaining four area-based facility groups of "Central Town" are displayed. The reason that the area-based facility group of "Central Town" in Nara-ken is discarded is that this area-based group includes only one chain organization facility or business place. As described above, the discarding process allows removal of unnecessary candidates for area-based groups that will most likely not be selected by a user, and thus the results are substantially more tailored to the user. It should be appreciated that in various other exemplary embodiments, in order to simplify the search process, the discarding process is not used. As discussed above, the groups may be displayed in order of increasing distance from the current position of the vehicle (step S8).

The user then selects a desired one of area-based groups displayed on the screen of the display unit 35 (step S9). In the example shown in Fig. 4, the user can select an area-based group of "Central Town" located in Shibuya-ku in Tokyo displayed at the top, by putting a cursor A thereon. If an area-based group is selected in the above-described manner, the area center determination unit 45 determines the center of the area in accordance with the centroid of the selected area-based group (step S9). Specifically, the area center determination unit 45 calculates the coordinates of the centroid of all facilities or business places of the chain organization in the area-based group on the map, as described above. Furthermore, as discussed above, weighting may be performed for each facility, depending on an attribute of the facility or the type of each facility, in the calculation of the coordinates of the centroid. In general, for example, facilities having central functions in an area or facilities attracting a large number of customers are weighted by large factors. Also, for example, facilities having no central functions in an area are weighted by small factors.

For example, when convenience stores attract a greater number of customers than banks, a greater weighting factor may be assigned to convenience stores than to banks. In a case in which in the Tokyo area, convenience stores A attract a greater number of customers than convenience stores B, a greater weighting factor is assigned to convenience stores A than to convenience stores B. By performing the weighting of facilities in the above-described manner, it becomes possible to set the centroid of the selected group at a social, economical, or cultural center of an area instead of at the geometric center of the area.

Thereafter, as shown in Fig. 1, the display controller 46 can display, on the screen of the display unit 35, an area including all facilities (x) in the area-based group as an area corresponding to the input name, that is, as an area in which further searching is to be performed. In this displaying process, the display controller 46 can automatically adjust the scale of the map such that all facilities or business places (x) of chain organizations in the area-based group are displayed fully on the same screen. If facilities or business places (x) are located over so wide an area that displaying all facilities or business places (x) on the same screen results in a scale which makes it difficult to view the facilities or business places (x), the map may be displayed with in a scrollable fashion.

In displaying the map of the area-based group, as shown in Fig. 1, the centroid B, calculated by the area center determination unit 45, is also displayed on the screen of the display unit 35. This allows the user to recognize the center of the area and thus easily select a desired point in the area as the destination.

If the user specifies a destination by selecting a desired point in the area displayed on the screen of the display unit 35, the destination setting unit 47 sets the selected point as the destination. In response, the vehicle navigation apparatus 15 searches for a route from the current position of the vehicle to the specified destination.

In the present exemplary embodiment, as described above, if an area name that is not included in the database is input, the chain organization search unit 43 searches for facilities, stores, or the like of chain organizations having a name wherein a part of the name is equal to the input area name. The area-based group generation unit 44 generates area-based groups by grouping the facilities or stores of the chain organizations into groups by areas, and the display controller 46 displays all areas corresponding to area-based groups detected based on the input area name, on the screen of the display unit 35, so that the user can select a desired point in an area as a destination.

Thus, even when a user inputs an unofficial name as an area name, searching can be performed based on the input area name, and it is possible to set a desired point in a detected area as the destination. Accordingly, the user is allowed to search for an area to be set as the destination, based on an unofficial area name such as a nickname or colloquial name.

Because searching unofficial areas is possible even when data specific to every unofficial area is not stored in the data storage unit 16, searching unofficial areas is possible without increasing the storage capacity of the data storage unit 16.

Furthermore, because the chain organization search unit 43 generates search terms by combining respective words indicating business places at the end of the input area name and performs backward-match searching using the generated search terms, business places of chain organizations can be correctly extracted and results unrelated to the input area are included in the search result. Thus, the area-based group generation unit 44 can correctly generate area-based groups.

Furthermore, because the centroid of the area-based group is calculated and the area-based group is displayed on the screen of the display unit 35 such that the centroid is located at the center of the screen, the user can recognize the center of the area and can easily set a desired point in the area as the destination.

A second exemplary embodiment of the present invention is described below. In this second exemplary embodiment, similar parts to those in the first embodiment are denoted by similar reference numerals, and a description thereof is omitted. Operations and advantages similar to those in the first embodiment are also omitted.

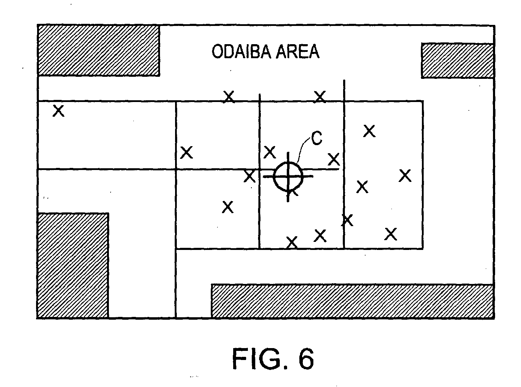

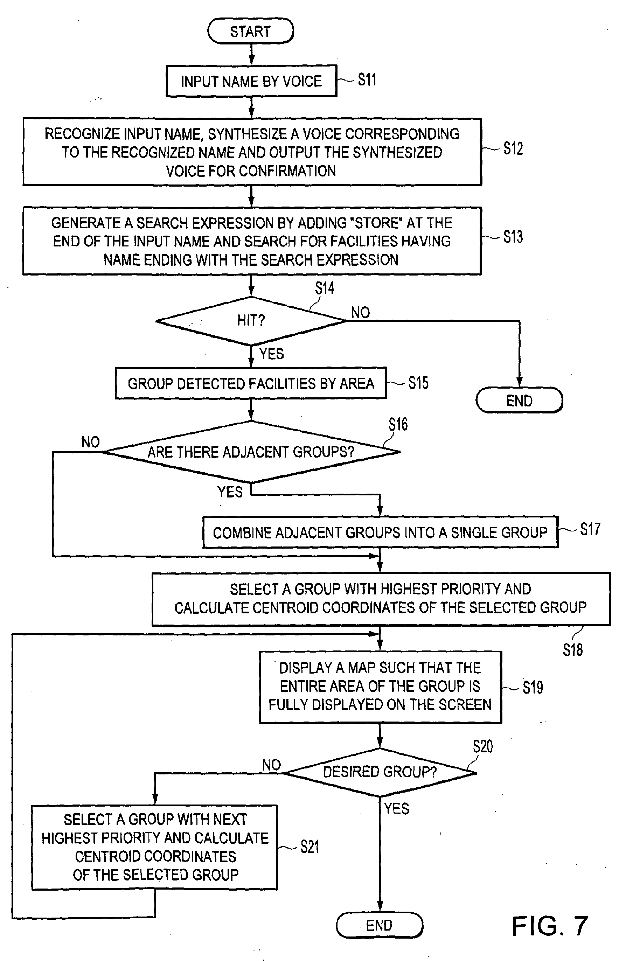

Fig. 6 is a diagram showing an area map displayed on a screen in accordance with a result of an area name search process performed by a vehicle navigation apparatus according to the second exemplary embodiment of the invention. Fig. 7 is a flow chart showing a process performed by the vehicle navigation apparatus to search for facility names according to the second exemplary embodiment of the invention.

The operation of the second exemplary embodiment is described below with reference to a specific example in which an area widely known as "Odaiba" in Tokyo is set as a destination. In this exemplary embodiment, it is assumed that the name of the destination is input via a user's voice. First, a user inputs a destination via a voice using the audio input unit 36 (step S 11). Specifically, for example, the user turns on a switch of a microphone used for voice recognition and says, for example, "to Odaiba" to the voice recognition microphone.

A voice recognizer of the audio input unit 36 recognizes the voice input as the name of the destination (step S12). For the purpose of confirmation, the voice synthesizer of the audio output unit 37 synthesizes a voice indicating the recognized name of the destination and outputs the resultant voice from a loudspeaker (step S12). For example, a voice saying, for example, "Odaiba, isn't it?" is output from the loudspeaker for the purpose of confirmation.

The destination name search unit 42 accesses the database stored in the data storage unit 16 and searches for facilities or places having exactly the same name as the input name "Odaiba." The searching is performed in accordance with the pronunciation. If no such facilities or places having the same name as the input name "Odaiba" are found, an area name search process is started. In this case, the chain organization search unit 43 determines that the input term "Odaiba" is a name of an area, and the chain organization search unit 43 searches for business places having a name including "Odaiba."

In this searching process, the chain organization search unit 43 first generates a search term by combining a predetermined word indicating business places at the end of "Odaiba." Herein, if the predetermined word indicating business places is "store," "Odaiba store" is set as the search term (step S13). The chain organization search unit 43 accesses the facility database stored in the data storage unit 16 and searches for facility names ending with the search term (step S14). The searching is performed in accordance with the pronunciation. As a result, facilities having a name ending with the search term are extracted. That is, facilities having names " Odaiba store" are extracted. Note that the search result only includes results containing the input area.

If a facility having a name ending with any one of the search terms is not found (step S14 =NO), the area name search process is ended. In this case, the audio output unit 37 outputs a voice to inform the user that no place corresponding to the input name is found. For example, a voice saying "Odaiba is not found" is synthesized by the voice synthesizer and output from the loudspeaker. Further searching may be performed by browsing a list of facilities sorted in the alphabetical order. This makes it possible to extract all facilities or places having names a part of which is equal to the input name "Odaiba."

If facilities having a name ending with one of the search terms described above are extracted (step S14=YES), the area-based group generation unit 44 generates area-based groups by grouping the facilities or business places of the chain organization extracted in the searching process performed by the chain organization search unit 43 into groups by areas (step S 15). Specifically, the facilities having names " Odaiba Store" are grouped by areas corresponding to cities, towns, villages, or special wards. As a result, area-based groups of "Odaiba" are obtained.

The area-based group generation unit 44 then determines whether there are area-based groups corresponding to adjacent areas such as cities, towns, villages, or special wards (step S16). If there are area-based groups corresponding to adjacent areas such as cities, towns, villages, or special wards (step S16=YES), the area-based group generation unit 44 combines such area-based groups into a single area-based group (step S 17). In this specific case of "Odaiba," area-based groups corresponding to three adjacent special wards Minato-ku, Koto-ku, and Shinagawa-ku in Tokyo are combined together into a single area-based group, and the resultant area-based group is dealt with as a single area-based group corresponding to the area called "Odaiba."

The area center determination unit 45 then determines the center of the area in accordance with the centroid of the area-based group. If there are two or more area-based groups generated in the above-described manner by the area-based group generation unit 44, the area center determination unit 45 selects an area-based group having highest priority in accordance with predetermined priority and determines the center of the area in accordance with the centroid of the selected area-based group (step S 18). The priority may be determined, for example, such that a group located closer to the current position of the vehicle detected by the current position detector 18 has higher priority, or such that a group located closer to a place registered as the position of a user's home has higher priority. The priority may also be determined such that an area-based group including a greater number of facilities of chain organizations has higher priority. In the following description, it is assumed that the priority is determined such that an area-based group including a greater number of facilities of chain organizations has higher priority. In the calculation of the coordinates of the centroid, weighting may be performed for each facility, depending on the attribute or the type of each facility.

Thereafter, as shown in Fig. 6, the display controller 46 displays, on the screen of the display unit 35, an area including all facilities or business places (x) in the area-based group as an area corresponding to the input name as an area in which further searching is to be performed (step S 19). In this displaying process, the display controller 46 automatically adjusts the scale of the map such that all facilities or business places (x) of chain organizations in the area-based group are displayed fully on the same screen. If facilities or business places (x) are located over so wide an area that displaying all facilities or business places (x) on the same screen results in a large scale which makes it difficult to view the facilities or business places (x), the map may be displayed with a small scale ratio in a scrollable fashion. In displaying the map of the area-based group, as shown in Fig. 6, the centroid C calculated by the area center determination unit 45 is also displayed on the screen of the display unit 35.

In order to make a confirmation as to whether the area displayed on the screen of the display unit 35 is an area desired by the user, the voice synthesizer of the audio output unit 37 synthesizes a voice and outputs it from the loudspeaker to prompt the user to make a confirmation (step S20). More specifically, for example, a voice saying "Minato-ku area in Tokyo is displayed. Is this area that you want?" is output from the loudspeaker for the purpose of confirmation. In response, the user inputs a voice indicating whether the displayed area is that the user wants to the audio input unit 36. More specifically, for example, the user turns on a switch of a microphone used for voice recognition and says "Yes" to the voice recognition microphone if the desired area is correctly displayed but says "No" if the displayed area is not the area the user wants.

If the displayed area is the area the user wants (step S20=YES), the user specifies a destination by selecting a desired point in the area displayed on the screen of the display unit 35. In response, the destination setting unit 47 sets the selected point as the destination. Then, the vehicle navigation apparatus 15 searches for a route from the current position of the vehicle to the specified destination.

If the displayed area is not the area the user wants (step S20=NO), the area center determination unit 45 selects an area-based group having a next highest priority in accordance with the predetermined priority and determines the center of the area in accordance with the centroid of the selected area-based group (step S21). The display controller 46 then displays the area including all facilities in the area-based group on the screen of the display unit 35 so that a desired point in the area can be specified as the destination (return to step S 19). Thereafter, the process described above is repeated.

In the second exemplary embodiment, as described above, a name of a destination is input via a voice, and a response to the input is output via a voice. Therefore, a user can search for a point in an area and can set the point as the destination as if the user tells the destination to a taxi driver. Furthermore, as with the first embodiment described above, searching for a destination can be performed using an unofficial name such as a nickname or a colloquial name. Thus, the user can easily perform searching and setting of a destination in a relaxed fashion without having to remember to an official name and without having to operate operation keys or the like of the input unit 34.

Although in the exemplary embodiments of the invention described above, the database is stored in the data storage unit 16 disposed in the vehicle navigation apparatus 15, and the database is accessed in the area name searching process, the database may be, for example, stored in a server disposed in an information center or the like, and the vehicle navigation apparatus 15 may, for example, access that server by means of radio communication or the like in the area name searching process. Furthermore, the area name searching process may be performed by the server. In this case, for example, a search result obtained in the area name searching process performed by the server is transmitted from the server to the vehicle navigation apparatus 15.

While various features of this invention have been described in conjunction with the exemplary embodiments outlined above, various alternatives, modifications, variations, and/or improvements of those features may be possible. Accordingly, the exemplary embodiments of the invention, as set forth above, are intended to be illustrative. Various changes may be made without departing from the spirit and scope of the invention.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus comprising
an input unit (34) adapted for inputting an area name and
a controller (47) adapted
to search for one or more business places having a name which includes the input area name,
to generate at least one area-based group of the searched business places, and
to display an area corresponding to one of the at least one area-based groups on a display (35).

2. The navigation apparatus of claim 1, wherein the controller is adapted to search a business place being at least a branch, a branch office, a sales office, an office, a stop, or a station, of a chain organization.

3. The navigation apparatus of claim 1 or 2, wherein the controller is adapted to search for the one or more business places using a search term, the search term being generated by combining a word indicating a business place and the area name.

4. The navigation apparatus of one of claims 1 to 3, wherein the controller is adapted to search for the one or more business places having a name which includes the input area name using backward-match searching.

5. The navigation apparatus of one of claims 1 to 4, wherein the controller is adapted to generate the at least one area-based group corresponding to a basic local government area by filtering the one or more business places in accordance with address information associated with the one or more business places.

6. The navigation apparatus of one of claims 1 to 5, wherein
the controller is adapted to generate a plurality of area-based groups, and
if two or more of the plurality of area-based groups are adjacent, to combine the adjacent two or more area based groups into a single area-based group.

7. The navigation apparatus of one of claims 1 to 6, wherein the controller is adapted to display two or more area-based groups in the form of a list, if there are two or more area-based groups generated by the controller, the order of the list being determined in accordance with a predetermined priority.

8. The navigation apparatus of one of claims 1 to 7, wherein the controller is adapted to determine a center of the area corresponding to the one of the at least one area-based groups based on a centroid of that area-based group and to display the center of the area on the display.

9. The navigation apparatus of claim 8, wherein the centroid is calculated by weighting a location of at least one business place in the one of the at least one area-based groups.

10. A navigation apparatus according to one of claims 1 to 9, wherein the input unit is adapted to have the area name input via a voice.

11. A method for searching for a location, comprising the steps of
inputting an area name;
searching for one or more business places having a name which includes the input area name;
generating at least one area-based group of the searched for one or more business places; and
displaying an area corresponding to one of the at least one area-based groups.

12. The method of claim 11, wherein the searching step comprises searching for at least one or more of a branch, a branch office, a sales office, an office, a stop, or a station, of a chain organization.

13. The method of claim 11 or 12, wherein
the searching step comprises
generating a search term by combining a word indicating a business place and the area name, and searching for the one or more business places using the search term.

14. The method of one of claims 11 to 13, wherein the searching step comprises searching for the one or more business places having a name which includes the input area name using backward-match searching.

15. The method of one of claims 11 to 14, wherein the generating step comprises
generating the at least one area-based group corresponding to a basic local government area by filtering the one or more business places in accordance with address information associated with the one or more business places.

16. The method of one of claims 11 to 15, wherein the generating step comprises generating a plurality of area-based groups, and
the method further comprising step of combining, if two or more of the plurality of area-based groups are adjacent, the adjacent two or more area based groups into a single area-based group.

17. The method of one of claims 11 to 16, wherein, if two or more area-based groups are generated, the method further comprises a step of displaying the two or more area-based groups in the form of a list, the order of the list being determined in accordance with a predetermined priority.

18. The method of one of claims 11 to 17, further comprising a step of
determining a center of the area corresponding to the one of the at least one area-based groups based on a centroid of that area-based group, and
wherein the displaying step comprises displaying the center of the area on the display.

19. The method of claim 18, wherein the step comprises calculating the centroid by weighting a location of at least one business place in the one of the at least one area-based groups.

20. The method of one of claims 11 to 19, wherein the inputting step comprises inputting the area name via voice.

21. A program, preferably stored on a storage medium, the program comprising program code executable on a data processing device, which data processing device, when executing the program code, is adapted to perform a method according to one of claims 11 to 20.

22. A navigation apparatus comprising
means for inputting an area name;
means for searching for one or more business places having a name which includes the input area name;
means for generating at least one area-based group by grouping the searched for one or more business places according to a corresponding location, each area-based group including one or more of the searched for business places; and
means for displaying an area corresponding to one of the at least one area-based groups on a display.
